# EUROPEAN PATENT SPECIFICATION

(11) **EP 2 669 535 B1**
(45) Date of publication and mention of the grant of the patent: **11.05.2016**
(21) Application number: 12170341.7
(22) Date of filing: 31.05.2012
(51) Int. Cl.: F16B 45/02

(54) **Safety Hook**
Sicherheitshaken
Crochet de sécurité

(43) Date of publication of application: 04.12.2013
(73) Proprietor: Lin, Pei Chuan, Taichung City 40360 (TW)
(72) Inventor: Lin, Pei Chuan, Taichung City 40360 (TW)
(74) Representative: Merckling, Norbert

(56) References cited:
- EP-A1- 0 620 375
- US-A- 1 362 512

## Description

### BACKGROUND OF THE INVENTION

### 1. Field of the Invention

The present invention relates to safety hooks and more particularly, to a safety hook with a safety locking member.

### 2. Description of the Prior Art

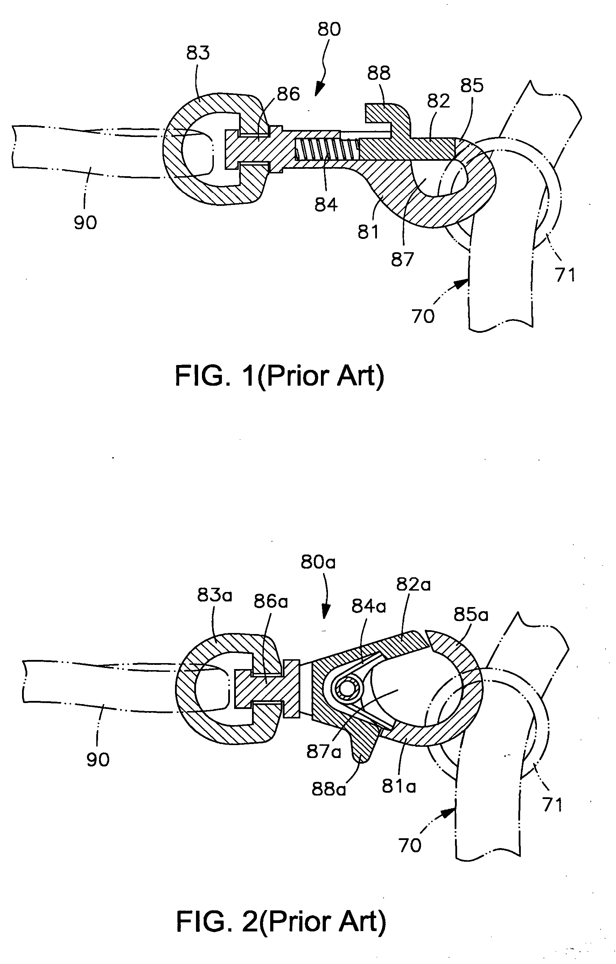

Fig. 1 illustrates a conventional swivel snap hook. According to this design, the swivel snap hook **80** comprises a hook body **81,** and a latch **82** slidably coupled to the hook body **81.** The hook body **81** has its one end terminating in a hooked portion **85** for hooking on an object, for example, a retaining ring **71** at a pet collar or pet harness **70,** and its other end forming a neck **86** for the coupling of a swivel ring **83** that is connected to a fabric belt **90** or similar object, such as rope or chain. Further, a compression spring **84** is stopped between the hook body **81** and the latch **82** to support the latch **82** in the latched position where the hooked portion **85** and the latch **82** define an enclosed opening **87** to hold the retaining ring **71** in place.

Fig. 2 illustrates another structure of swivel snap hook according to the prior art. According to this design, the swivel snap hook **80a** is substantially similar to the swivel snap hook **80** shown in Fig. 1, comprising a hook body **81a** having a hooked portion **85a** and a neck **86a,** a latch **82a** for closing the hooked portion **85a,** a swivel ring **83a** rotatably coupled to the neck **86a,** and a spring member **84a** set between the hook body **81a** and the latch **82a.** The difference between the swivel snap hook **80a** shown in Fig. 2 snap hook **80a** shown in Fig. 2 is pivotally coupled to the associating hook body **81a,** and the spring member **84a** of the swivel snap hook **80a** shown in Fig. 2 is a torsion spring that normally holds the latch **82a** in the latched position where the hooked portion **85a** and the latch **82a** define an enclosed opening **87a** to secure a retaining ring **71** of a pet collar or pet harness **70.** Except the stated differences, the two swivel snap hooks **80** and **80a** are substantially similar in structure and function.

Further, the latches **82** and **82a** of the two swivel snap hooks **80** and **80a** commonly have an outwardly protruded finger rod **88** or **88a,** facilitating operation. However, the outwardly protruded finger rod **88** or **88a** may be driven accidentally by the retaining ring **71** or an external force to unlock the latch **82** or **82a,** causing the retaining ring **71** to fall out of the hooked portion **85** or **85a,** or leading to a serious accident. For example, the chained or tied dog may run out suddenly, due to accidental disconnection of the retaining ring **71** from the swivel snap hook **80** or **80a,** leading to a great risk of being hit by a car or biting a passer-by.

Further prior art, EP 620375, discloses a safety hook comprising the features of the preamble of claim 1.

### SUMMARY OF THE INVENTION

The objective of the present invention is to provide a safety hook, which can lock the latch in the latched position, avoiding false operation and assuring a high level of safety.

To achieve this and other objects of the present invention, a safety hook comprises a hook body defining a front opening, a swivel ring coupled to a rear side of the hook body, a latch pivotally connected to the hook body and movable between a latched position and an unlatched position to close/open the front opening of the hook body, a spring member stopped between the hook body and the latch to support the latch in the latched position, and a safety locking member mounted in the latch and movable between a locking position and an unlocking position. When the safety locking member is moved to the locking position, the latch is locked in the latched position. When the safety locking member is moved to the unlocking position, the latch is released from the constraint and is operable to move the latch arm thereof out of the front opening of the hook body.

When compared to the prior art designs, the safety hook of the present invention provides a safety locking member for locking the latch in the latched position, avoiding a false operation of the latch and assuring a high level of safety.

Other advantages and features of the present invention will be fully understood by reference to the following specification in conjunction with the accompanying drawings, in which like reference signs denote like components of structure.

### BRIEF DESCRIPTION OF THE DRAWINGS

Fig. 1 is a sectional view of a swivel snap hook according to the prior art.
Fig. 2 is a sectional view of another structure of swivel snap hook according to the prior art.
Fig. 3 is a perspective view of a latched status of a safety hook in accordance with the present invention.
Fig. 4 is an exploded view of the present invention.
Fig. 5 is a sectional view of the present invention, illustrating the latch in the latched position.
Fig. 6 is a sectional view of the present invention, illustrating the latch unlatched.

### DETAILED DESCRIPTION OF THE PREFERRED EMBODIMENT

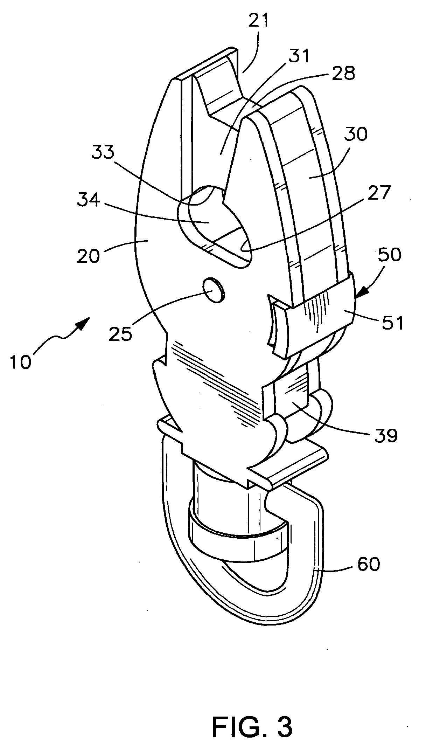

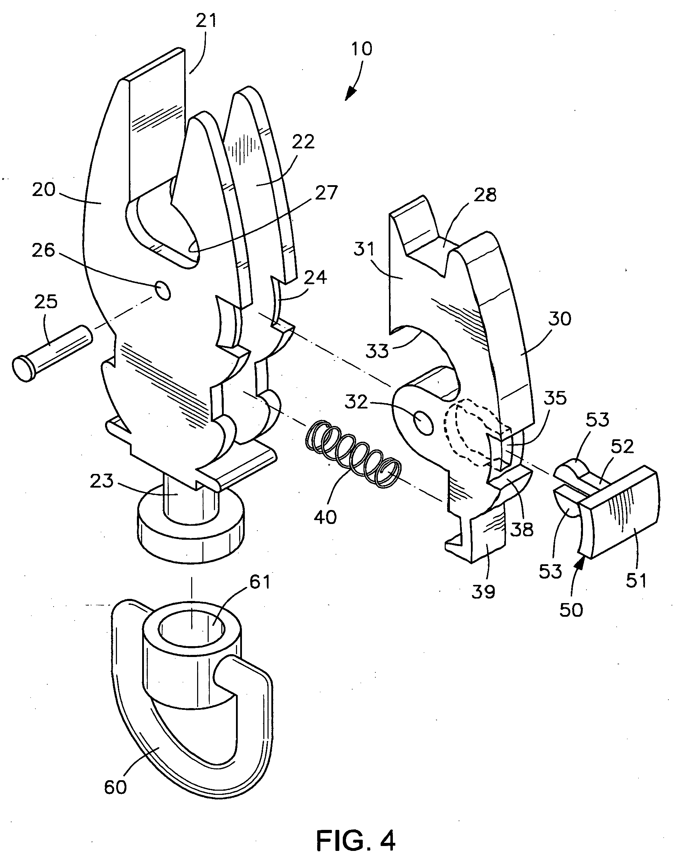

A perspective view, an exploded view and a sectional view of the present invention safety hook **10** are shown in Figs. 3, 4 and 5. The safety hook **10** comprises a hook body **20,** a latch **30,** a spring member **40,** a safety locking member **50,** and a swivel ring **60.**

The hook body **20** comprises a front opening **21** defined in a front end thereof for the access of a retaining ring of a first external object (not shown), a latch chamber **22** defined therein in communication with the front opening **21** for accommodating the latch **30,** a neck **23** disposed at a rear end thereof opposite to the front opening **21** for supporting the swivel ring **60,** a notch **24** located on one lateral side thereof of which the purpose will be described latter, a mounting through hole **26** disposed at a rear side relative to the front opening **21,** and a pivot member, for example, rivet **25** inserted through the mounting through hole **26** and riveted thereto to pivotally connect the latch **30** to the hook body **20.**

The latch **30** is inserted into the latch chamber **22** of the hook body **20,** comprising a pivot hole 32 coaxially disposed in the mounting through hole 26 for the passing of the rivet 25 for allowing the latch 30 to be turned about the rivet 25, a latch arm 31 insertable into an upper part of the front opening 21 of the hook body 20 and adapted for closing/opening the front opening 21 of the hook body 20 when the latch 30 is turned inwards or outwards relative to the hook body 20, a lateral opening 33 disposed at a bottom side of the latch arm 31, a sliding groove 35, a pair of locking-control grooves 36 symmetrically bilaterally disposed in the sliding groove 35, a pair of unlocking-control grooves 37 symmetrically bilaterally disposed in the sliding groove 35 near the locking-control grooves 36 for holding the safety locking member 50 in a locking position and an unlocking position, a recess **38** disposed outside the sliding groove **35** and fitting the notch **24** of the hook body **20** for receiving an operating handle **51** of the safety locking member **50,** and a tail piece **39** disposed at a rear side thereof. Further, the sliding groove **35** can be formed inside the latch **30,** as illustrated, or alternatively, formed on the outside of the latch **30.** Further, the lateral opening **33** of the latch **30** defines with a lower part **27** of the front opening **21** of the hook body **20** an enclosed opening **34** to secure the retaining ring of the aforesaid first external object (not shown).

The spring member **40** is adapted for returning the latch **30** automatically, having its one end stopped against the tail piece **39** of the latch **30** and its other end stopped against an inside wall of the latch chamber **22** of the hook body **20.** According to the present preferred embodiment, the spring member **40** is a compression spring that exerts a force when compressed. However, other equivalent elastic means may be used to substitute for a compression spring.

The safety locking member **50** is movable in the sliding groove **35** of the latch **30** for locking or unlocking the latch **30.** The safety locking member **50** comprises an operating handle **51,** and a split bolt **52.** The operating handle **51** is operable by the fingers of a person to move the safety locking member **50,** facilitating operation of the latch **30.** The split bolt **52** is a flat split bolt extended from an inner side of the operating handle **51** and inserted into the sliding groove **35.** Further, the split bolt **52** is equally split into two symmetrical halves, having an outwardly protruded retaining block **53** located on the distal end of each of the two symmetrical halves thereof. Following movement of the safety locking member **50** in the sliding groove **35,** the retaining blocks **53** can be selectively engaged into the locking-control grooves **36** or unlocking-control grooves **37,** thus, the safety locking member 50 can be kept in the locking position or unlocking position, prohibiting or allowing operation of the latch **30.** According to the present preferred embodiment, two retaining blocks **53,** two locking-control grooves **36** and unlocking-control grooves **37** are provided. Alternatively, one single retaining block **53** can be provided to match with one single locking-control groove **36** and one single unlocking-control groove **37,** achieving the same effects.

The swivel ring **60** comprises an axle hole **61** coupled to the neck **23** of the hook body **20.** Thus, the swivel ring **60** is connected to the hook body **20** and can be turned round the neck **23.** Further, the swivel ring **60** can be fastened to a second external object (not shown), for example, a fabric belt, rope or chain.

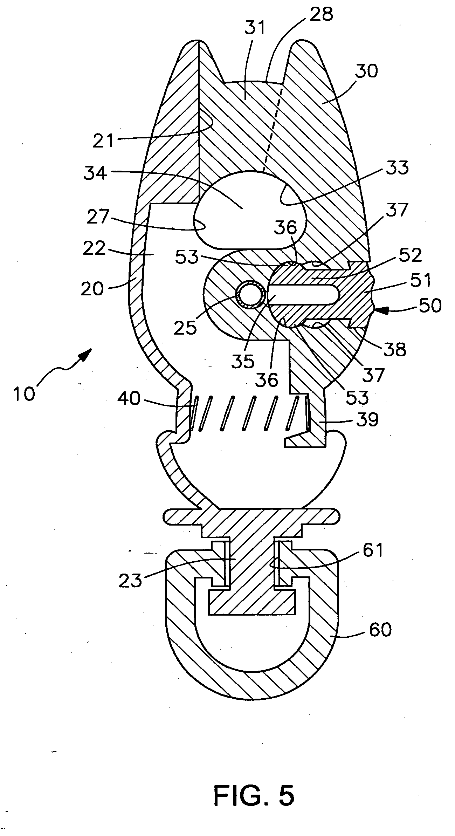

Referring to Fig. 5, when moving the safety locking member **50** inwards to force the retaining blocks **53** of the split bolt **52** into engagement with the locking-control grooves **36,** the operating handle **51** is fitted into the notch **24** of the hook body **20** and the recess **38** of the latch **30,** and therefore the latch **30** is held in the latched position and will not be unlatched accidentally, avoiding false operation and disconnection of the retaining ring of the aforesaid first external object.

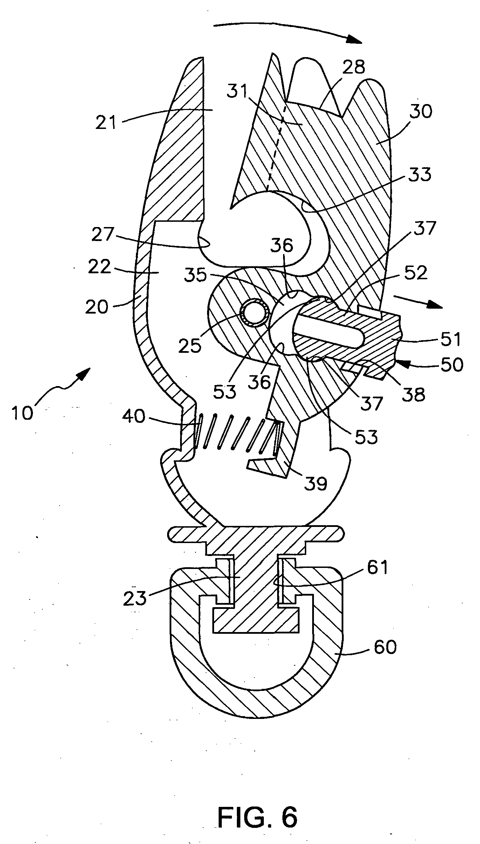

Referring to Fig. 6, when moving the safety locking member **50** outwards to disengage the retaining blocks **53** of the split bolt **52** from the locking-control grooves **36** and to force the retaining blocks **53** of the split bolt **52** into engagement with the unlocking-control grooves **37,** the operating handle **51** is moved away from the notch **24** of the hook body **20** and the recess **38** of the latch **30,** and therefore the latch **30** is unlocked. At this time, the user can operate the handle **51** or a finger notch **28** at the top side of the latch arm **31** to turn the latch **30** about the rivet **25** in direction away from the front opening **21** of the hook body **20,** thereby opening the front opening **21** of the hook body **20** for allowing removal of the retaining ring of the first external object from the safety hook **10.**

Although a particular embodiment of the invention has been described in detail for purposes of illustration, various modifications and enhancements may be made without departing from the scope of the claims. Accordingly, the invention is not to be limited except as by the appended claims.

## Claims

1. A safety hook **(10),** comprising:
a hook body **(20)** comprising a front opening **(21)** defined in a front end thereof, a latch chamber **(22)** defined therein in communication with said front opening **(21)** and a notch **(24)** located on one lateral side of the hook body **(20);**
a latch **(30)** inserted into said latch chamber **(22)** and pivotally connected to said hook body **(20),** said latch **(30)** comprising a latch arm **(31)** insertable into an upper part of said front opening **(21)** of said hook body **(20);** and
a spring member **(40)** stopped between said hook body **(20)** and said latch **(30)** and imparting a pressure to said latch **(30)** to force said latch arm **(31)** into the upper part of said front opening **(21)** of said hook body **(20);**
**characterised in that** the safety hook **(10)** further comprising :
a sliding groove **(35),** at least one locking-control groove **(36)** and at least one unlocking-control groove **(37)** formed in said sliding groove **(35),** a lateral opening **(33)** disposed at a bottom side of said latch arm **(31)** and defining with a lower part **(27)** of said front opening **(21)** of said hook body **(20)** an enclosed opening **(34),** and a recess **(38)** disposed outside said sliding groove **(35)** and fitting the notch **(24)** of said hook body **(20);**
a safety locking member **(50)** comprising a split bolt **(52)** movably inserted into said sliding groove **(35)** of said latch **(30)** for locking or unlocking the latch **(30)** and an operating handle **(51)** operable to move said split bolt **(52)** in said sliding groove **(35),** said split bolt **(52)** comprising at least one retaining block **(53);**
wherein when moving said safety locking member **(50)** inwards to force said at least one retaining block **(53)** into engagement with said at least one locking-control groove **(36),** said operating handle **(51)** is fitted into said notch **(24)** of said hook body **(20)** and said recess **(38)** of said latch **(30)** and said latch **(30)** is locked in a latched position where said latch arm **(31)** is inserted into the upper part of said front opening **(21)** of said hook body **(20);** when moving said safety locking member **(50)** outwards to disengage said at least one retaining block **(53)** from said at least one locking-control groove **(36)** and to force said at least one retaining block **(53)** into engagement with said at least one unlocking-control groove **(37),** said operating handle **(51)** is moved away from said notch **(24)** of said hook body **(20)** and said recess **(38)** of said latch **(30)** and said latch **(30)** is unlocked and movable relative to said hook body **(20)** in direction away from said front opening **(21)** of said hook body **(20).**

2. The safety hook **(10)** as claimed in claim 1, wherein said hook body **(20)** further comprises a neck **(23)** disposed at a rear end thereof opposite to said front opening **(21),** and a swivel ring **(60)** rotatably coupled to said neck **(23).**

3. The safety hook **(10)** as claimed in claim 1, wherein said sliding groove **(35)** of said latch **(30)** comprises a pair of oppositely disposed locking-control grooves **(36)** and a pair of oppositely disposed unlocking-control grooves **(37);** said split bolt **(52)** of said safety locking member **(50)** is equally split into two symmetrical halves, having one said retaining block **(53)** located on each of said two symmetrical halves.

4. The safety hook **(10)** as claimed in claim 1, wherein said latch **(30)** further comprises a finger notch **(28)** located on a top side of said latch arm **(31).**

## Patentansprüche

1. Ein Sicherheitshaken (10), umfassend:
- einen Hakenkörper (20) mit einer Vorderöffnung (21), die in einem Vorderende des Hakens definiert ist, einer darin definierten Riegelkammer (22), die in Kommunikation mit besagter Vorderöffnung (21) steht, und einer Kerbe (24), die sich auf einer Seite des Hakenkörpers (20) befindet;
- einen Riegel (30), der in besagte Riegelkammer (22) eingeführt ist und zentral mit dem besagten Hakenkörper (20) verbunden ist, wobei besagter Riegel (30) einen Riegelarm (31) umfasst, der in einen oberen Teil der besagten Vorderöffnung (21) des besagten Hakenkörpers (20) einsetzbar ist; und
- ein Federglied (40), das zwischen besagtem Hakenkörper (20) und besagtem Riegel (30) gehalten wird und auf den besagten Riegel (30) einen Druck ausübt, um besagten Riegelarm (31) in den oberen Teil der besagten Vorderöffnung (21) des besagten Hakenkörpers (20) zu forcieren;
**dadurch gekennzeichnet, dass** der Sicherheitshaken (10) darüber hinaus folgendes umfasst:
- eine Gleitrille (35), mindestens eine Verschlusssteuerungsrille (36) und mindestens eine Öffnungssteuemngsrille (37), die in der Gleitrille (35) gebildet sind, eine seitliche Öffnung (33) an der Unterseite des besagten Riegelarms (31), der mit einem unteren Teil (27) der besagten Vorderöffnung (21) des besagten Hakenkörpers (20) eine abgeschlossene Öffnung (34) und eine Vertiefung (38) definiert, die außerhalb der besagten Gleitrille (35) angeordnet ist und in die Kerbe (24) des besagten Hakenkörpers (20) passt;
- ein Sicherheitsverriegelungsglied (50) mit einem Splintbolzen (52), der beweglich in die besagte Gleitrille (35) des besagten Riegels (30) zur Verriegelung oder Entriegelung des Riegels (30) beweglich eingeführt wird und einem Bediengriff (51), der bedient werden kann, um besagten Splintbolzen (52) in der besagten Gleitrille (35) zu bewegen, wobei besagter Splintbolzen (52) mindestens einen Fangblock (53) umfasst;
wobei wenn besagtes Verriegelungsglied (50) nach innen bewegt wird, um den besagten, mindestens einen Fangblock (53) zu forcieren, um in die besagte, mindestens eine Verschlusssteuerungsrille (36) einzugreifen, wird besagter Bediengriff (51) in besagter Kerbe (24) des besagten Hakenkörpers (20) und der besagten Vertiefung (38) von besagtem Riegel (30) befestigt, und besagter Riegel (30) wird in einer verriegelten Position verschlossen, wo besagter Riegelarm (31) in den oberen Teil der besagten Vorderöffnung (21) des besagten Hakenkörpers (20) eingeführt wird;
wenn besagtes Verriegelungsglied (50) nach außen bewegt wird, um den besagten, mindestens einen Fangblock (53) aus der besagten mindestens einen Verschlusssteueningsrille (36) zu befreien, und den besagten mindestens einen Fangblock (53) zum Eingreifen in die besagte mindestens eine Öffhungssteuerungsrille (37) zu forcieren, wird besagter Bediengriff (51) von besagter Kerbe (24) des besagten Hakens (20) entfernt und besagte Vertiefung (38) des besagten Riegels (30) und besagter Riegel (30) werden entriegelt und beweglich in Bezug auf besagten Hakenkörper (20) in eine Richtung weg von besagter Vorderöffnung (21) des besagten Hakenkörpers (20).

2. Der Sicherheitshaken (10) gemäß Anspruch 1, **dadurch gekennzeichnet, dass** der besagte Hakenkörper (20) darüber hinaus ein Halsstück (23), das an der Hinterseite gegenüber der besagten Vorderöffnung (21) angeordnet ist, und einen Drehring (60), der drehbar mit dem besagten Halsstück (23) gekoppelt ist, umfasst.

3. Der Sicherheitshaken (10) gemäß Anspruch 1, **dadurch gekennzeichnet, dass** die besagte Gleitrille (35) des besagten Riegels (30) ein Paar einander gegenüberstehend angeordnete Verschlusssteuerungsrillen (36) und eine Paar einander gegenüberstehend angeordnete Öffnungssteuerungsrillen (37) umfasst; besagter Splintbolzen (52) des besagten Sicherheitsverriegelungsglieds (50) wird gleichmäßig in zwei symmetrische Hälften aufgeteilt, wobei sich ein besagter Fangblock (53) auf jeder der besagten beiden symmetrischen Hälften befindet.

4. Der Sicherheitshaken (10) gemäß Anspruch 1, **dadurch gekennzeichnet, dass** der besagte Riegel (30) darüber hinaus eine Fingerkerbe (28) umfasst, die sich auf der Oberseite des besagten Riegelarms (31) befindet.

## Revendications

1. Crochet de sécurité (10) comprenant :
- un corps de crochet (20) comportant une ouverture avant (21) définie dans une extrémité avant de celui-ci, une chambre de verrou (22) définie dans celui-ci en communication avec ladite ouverture avant (21) et une encoche (24) située sur l'un des côtés latéraux du corps de crochet (20) ;
- un verrou (30) inséré dans ladite chambre de verrou (22) et connecté de façon pivotante audit corps de crochet (20), ledit verrou (30) comprenant un bras de verrou (31) pouvant être inséré dans une partie supérieure de ladite ouverture avant (21) dudit corps de crochet (20) ; et
- un élément de ressort (40) arrêté entre ledit corps de crochet (20) et ledit verrou (30) et exerçant une pression sur ledit verrou (30) afin de forcer ledit bras de verrou (31) dans la partie supérieure de ladite ouverture avant (21) dudit corps de crochet (20) ;
**caractérisé en ce que** le crochet de sécurité (10) comprend en outre :
- une rainure de coulissement (35), au moins une rainure de commande de verrouillage (36) et au moins une rainure de commande de déverrouillage (37) formées dans ladite rainure de coulissement (35) et une ouverture latérale (33) disposée à un côté inférieur dudit bras de verrou (31) et définissant avec une partie inférieure (27) de ladite ouverture avant (21) dudit corps de crochet (20) une ouverture enfermée (34) et un renfoncement (38) situé à l'extérieur de ladite rainure de coulissement (35) et recevant l'encoche (24) dudit corps de crochet (20) ;
- un élément de verrouillage de sécurité (50) comprenant un boulon fendu (52) inséré de façon mobile dans ladite rainure de coulissement (35) dudit verrou (30) afin de verrouiller ou de déverrouiller le verrou (30) et une poignée de commande (51) actionnable pour déplacer ledit boulon fendu (52) dans ladite rainure de coulissement (35), ledit boulon fendu (52) comprenant au moins un bloc de retenue (53) ;
dans lequel, lors du déplacement dudit élément de verrouillage de sécurité (50) vers l'intérieur pour forcer ledit au moins un bloc de retenue (53) en engagement avec ladite au moins une rainure de commande de verrouillage (36), ladite poignée de commande (51) est agencée dans ladite encoche (24) dudit corps de crochet (20) et ledit renfoncement (38) dudit verrou (30) et ledit verrou (30) est verrouillé dans une position verrouillée dans laquelle ledit bras de verrou (31) est inséré dans la partie supérieure de ladite ouverture avant (21) dudit corps de crochet (20) ; lors du déplacement dudit élément de verrouillage de sécurité (50) vers l'extérieur pour désengager ledit au moins un bloc de retenue (53) de ladite au moins une rainure de commande de verrouillage (36) et pour forcer ledit au moins un bloc de retenue (53) en engagement avec ladite au moins une rainure de commande de déverrouillage (37), ladite poignée de commande (51) est déplacée à l'écart de ladite encoche (24) dudit corps de crochet (20) et dudit renfoncement (38) dudit verrou (30) et ledit verrou (30) est déverrouillé et mobile par rapport audit corps de crochet (30) dans une direction en s'écartant de ladite ouverture avant (21) dudit corps de crochet (20).

2. Crochet de sécurité (10) selon la revendication 1, dans lequel ledit corps de crochet (20) comprend en outre un étranglement (23) qui est situé à une extrémité arrière de celui-ci à l'opposé de ladite ouverture avant (21) et un anneau pivotant (60) couplé de façon rotative audit étranglement (23).

3. Crochet de sécurité (10) selon la revendication 1, dans lequel ladite rainure de coulissement (35) dudit verrou (30) comprend une paire de rainures de commande de verrouillage disposées en opposition (36) et une paire de rainures de commande de déverrouillage disposées en opposition (37) ; ledit boulon fendu (52) dudit élément de verrouillage de sécurité (50) étant fendu uniformément en deux moitiés symétriques, présentant un bloc de retenue susdit (53) situé sur chacune desdites deux moitiés symétriques.

4. Crochet de sécurité (10) selon la revendication 1, dans lequel ledit verrou (30) comprend en outre une encoche à doigt (28) située sur un côté supérieur dudit bras de verrou (31).
